# EUROPÄISCHE PATENTSCHRIFT

(11) **EP 3 292 023 B1**
(45) Veröffentlichungstag und Bekanntmachung des Hinweises auf die Patenterteilung: **11.05.2022**
(21) Anmeldenummer: 16710981.8
(22) Anmeldetag: 21.03.2016
(51) Int. Cl.: B60R 1/00, G06T 3/40

(54) **VERFAHREN ZUR DARSTELLUNG EINER FAHRZEUGUMGEBUNG EINES FAHRZEUGES**
METHOD FOR DISPLAYING AN AREA SURROUNDING A VEHICLE
PROCÉDÉ DE REPRÉSENTATION D'UN ENVIRONNEMENT D'UN VÉHICULE

(30) Priorität: 07.05.2015 DE 102015204214
(43) Veröffentlichungstag der Anmeldung: 14.03.2018
(73) Patentinhaber: Robert Bosch GmbH, 70442 Stuttgart (DE)
(72) Erfinder: LIEPELT, David, 70376 Stuttgart (DE); CANO, Raphael, 70180 Stuttgart (DE); HUCKER, Dennis, 76359 Marxzell (DE); ESPARZA, Maria-Jesus, 71229 Leonberg (DE); ESPARZA GARCIA, Jose Domingo, 70178 Stuttgart (DE)
(86) Internationale Anmeldenummer: PCT/EP2016/056138
(87) Internationale Veröffentlichungsnummer: WO 2016/177508

(56) Entgegenhaltungen:
- EP-A1- 2 709 069
- DE-A1-102011 084 554
- DE-A1-102011 087 901
- DE-A1-102012 018 326

## Beschreibung

### Stand der Technik

Die vorliegende Erfindung betrifft ein Verfahren zur Darstellung einer Fahrzeugumgebung eines Fahrzeuges.

Fahrassistenzsysteme zielen darauf ab, einen Fahrer beim Führen eines Fahrzeuges zu unterstützen. Ein solches Unterstützen des Fahrers kann beispielsweise die folgenden Funktionen umfassen:
- Darstellen einer Umgebung im Nahbereich des Fahrzeuges, um Zusammenstöße mit Hindernissen zu vermeiden, die nicht im unmittelbaren Blickfeld des Fahrers liegen,
- Übernehmen einiger Aufgaben des Fahrers, um den Fahrkomfort für den Fahrer zu erhöhen,
- Überwachen von Aktivitäten des Fahrers und Eingreifen bei Gefahrensituationen, oder
- Automatisiertes Fahren ohne die notwendige Anwesenheit des Fahrers.

Die vorliegende Erfindung betrifft insbesondere eine Nutzung von Belegungsinformationen, welche über Sensoren bezogen werden, für eine optimale Visualisierung. So wird bei sogenannten Surround-View-Systemen jede zusammengesetzte Darstellung der Fahrzeugumgebung mittels einer Bildverarbeitung errechnet, die auch als bildbasiertes Rendering (image based rendering - IBR) bezeichnet wird. Dabei werden tatsächliche Bilder genutzt, um eine angenommene Geometrie zu texturieren. Die Geometrie wird normalerweise mittels Abstandsinformationen definiert, die durch unterschiedliche Sensoren bereitgestellt werden. Das Ziel dabei ist es, eine realistische und leicht verständliche Darstellung von Informationen für den Fahrer zu erzeugen.

Zumeist wird dabei darauf abgezielt, die zur Bildberechnung verwendete Geometrie mit den Abstandsinformationen möglichst genau übereinstimmen zu lassen. Dies verbessert die Darstellung in einigen Fällen, aber erzeugt in einigen Szenarien auch visuelle Artefakte. Insbesondere in einem Szenario, in dem Objekte mit unterschiedlichem Abstand zu dem Fahrzeug vorliegen, wird eine sehr komplexe Geometrie benötigt, damit diese Geometrie mit den tatsächlichen Abstandsinformationen übereinstimmt. Zudem sind die so erzeugten Darstellungen nicht so leicht verständlich wie gewünscht.

EP2709069A1 beschreibt ein Verfahren für ein bildgebendes Fahrerassistenzsystem mit dem eine annähernd verdeckungsfreie Umsichtfunktion erreicht werden soll.

US20120069153A1 beschreibt eine Vorrichtung zur Überwachung einer Fahrzeugumgebung, in der eine Vielzahl von Kameras genutzt wird, um Bilder von einem Bereich um ein Fahrzeug zu erfassen.

DE102011084554A1 beschreibt ein Verfahren zur Veränderung einer Projektionsebene bei Detektion eines Objektes.

### Offenbarung der Erfindung

Das erfindungsgemäße Verfahren für eine Recheneinheit zum Erstellen einer Darstellung einer Fahrzeugumgebung eines Fahrzeuges wird beschrieben im unabhängigen Anspruch 1.

Durch das erfindungsgemäße Verfahren werden ungünstige Deformationen in der geometrischen Projektionsfläche vermieden, welche typischerweise auftreten, wenn versucht wird, die Geometrie möglichst genau entsprechend der Fahrzeugumgebung zu modellieren. Zudem werden Artefakte vermieden, die entstehen, wenn kleine Bereiche eines Bildes als Textur über einen großen Bereich der Projektionsfläche gelegt werden. Zudem wird durch die vereinfachte geometrische Projektionsfläche der benötigte Rechenaufwand für eine zugehörige Bildbearbeitung verringert und diese somit beschleunigt.

Die Unteransprüche zeigen bevorzugte Weiterbildungen der Erfindung.

Es ist vorteilhaft, wenn die Hüllkurve in einem Übergangsbereich zwischen einem der geradlinigen Elemente und einem benachbarten Kurvenelement stetig differenzierbar ist. Es wird somit ein Knick in der geometrische Projektionsfläche vermieden, wodurch sichtbare Artefakte vermieden werden.

Weiter ist es vorteilhaft, wenn zwei der geradlinigen Elemente parallel zu einer Längsachse des Fahrzeuges liegen und/oder zwei der geradlinigen Elemente parallel zu einer Querachse des Fahrzeuges liegen. Dadurch wird eine Anzahl möglicher Hüllkurven verringert und somit ein Rechenaufwand zum Berechnen der geometrische Projektionsfläche weiter verringert.

Ebenso ist es vorteilhaft, wenn bei dem Ermitteln der signifikanten Punkte eine Filterung bezüglich fehlerhaft erfasster Messpunkte erfolgt. Dadurch wird vermieden, dass eine Lage und Form der Hüllkurve durch einzelne, nicht korrekt erfasste Messwerte verzerrt wird.

Auch ist es vorteilhaft, wenn die Wandbereiche in einem Verlauf entlang einer Hochachse des Fahrzeuges geradlinig sind. Dadurch wird eine ebene Projektionsfläche geschaffen, wodurch das Projizieren der Kamerabilder auf die Projektionsfläche vereinfacht wird. Zudem werden weitere ungünstige Deformationen in der geometrischen Projektionsfläche vermieden, welche zu ungewollten Artefakten in der Darstellung der Fahrzeugumgebung führen können.

Erfindungsgemäß liegt das Zentrum der Ellipse, auf welcher eines der Kurvenelemente liegt, in einem Kontaktpunkt zweier seitlicher Bereiche. Dadurch wird eine Anzahl möglicher Hüllkurven verringert und somit ein Rechenaufwand zum Berechnen der geometrische Projektionsfläche weiter verringert.

Erfindungsgemäß erfolgt das Ermitteln der signifikanten Punkte basierend auf einer durch eine Abstandssensorik durchgeführten Umfelderfassung des Fahrzeuges. Somit wird keine zusätzliche Sensorik in dem Fahrzeug benötigt.

Eine erfindungsgemäße Recheneinheit wird im unabhängigen Anspruch 6 beschrieben.

### Kurze Beschreibung der Zeichnungen

Nachfolgend werden Ausführungsbeispiele der Erfindung unter Bezugnahme auf die begleitende Zeichnung im Detail beschrieben. In der Zeichnung ist:
- Figur 1: ein Ablaufdiagramm des erfindungsgemäßen Verfahrens in einer beispielhaften Ausführungsform,
- Figur 2: ein Fahrzeug mit einer Vorrichtung zur Durchführung des erfindungsgemäßen Verfahrens in der beispielhaften Ausführungsform, und
- Figuren 3a bis 3d: Messpunkte einer Abstandssensorik in beispielhaften Szenarien, in denen sich Objekte in einer Fahrzeugumgebung des Fahrzeuges 1 befinden.

### Ausführungsform der Erfindung

Es ist ein Grundgedanke der vorliegenden Erfindung, eine einfache Geometrieanpassung bei einer Darstellung einer Fahrzeugumgebung zu nutzen, bei welcher Belegungsinformationen hinsichtlich der Fahrzeugumgebung berücksichtigt werden, aber keine komplexen geometrischen Formen zugelassen sind.

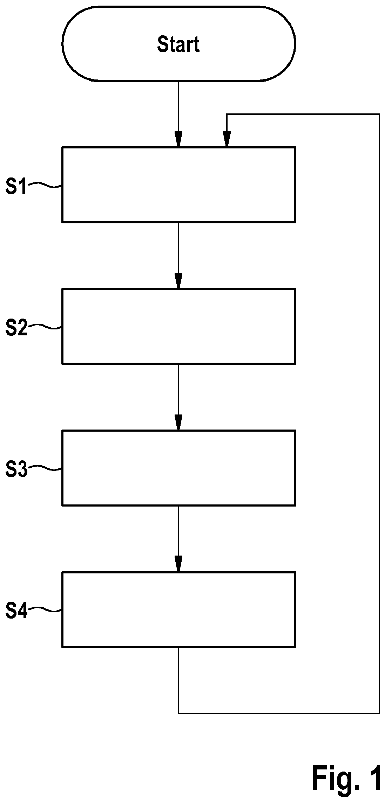

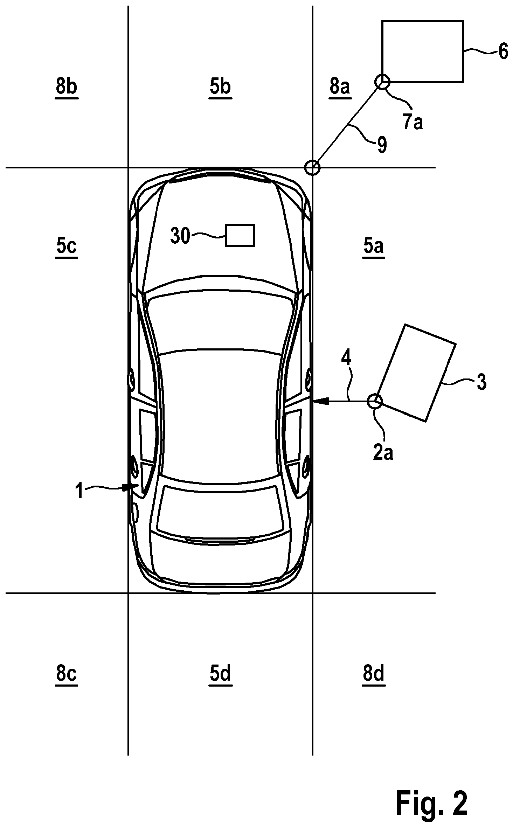

Figur 1 zeigt ein Ablaufdiagramm des erfindungsgemäßen Verfahrens in einer vorteilhaften Ausführungsform. Das Verfahren wird von einer Recheneinheit 30 ausgeführt, die in einem Fahrzeug 1 angeordnet ist. Ein solches Fahrzeug 1 ist in Figur 2 dargestellt.

In einem ersten Schritt S1 erfolgt ein Ermitteln jeweils eines ersten signifikanten Punktes 2a, 2b, 2c für vier seitliche Bereiche 5a, 5b, 5c, 5d des Fahrzeuges 1, welcher die Lage eines auf dieser Seite des Fahrzeuges 1 nächstgelegen Objektes 3 mit einem minimalen Abstand 4 zu der zugehörigen Seite des Fahrzeuges 1 beschreibt.

Die vier seitlichen Bereich 5a, 5b, 5c, 5d sind ein rechter seitlicher Bereich 5a, ein vorderer seitlicher Bereich 5b, ein linker seitlicher Bereich 5c und ein hinterer seitlicher Bereich 5d. Die vier seitlichen Bereich 5a, 5b, 5c, 5d sind in Figur 2 gezeigt. Der rechte seitliche Bereich 5a liegt neben einer rechten Seite des Fahrzeuges 1, wobei dabei lediglich ein Bereich auf Höhe des Fahrzeuges 1 bezeichnet ist. Somit hat der rechte seitliche Bereich 5a in dieser beispielhaften Ausführungsform eine Ausdehnung, die einer Länge des Fahrzeuges 1 entspricht. Der vordere seitliche Bereich 5b liegt vor einer Vorderseite des Fahrzeuges 1, wobei dabei lediglich ein Bereich auf Höhe des Fahrzeuges 1 bezeichnet ist. Somit hat der vordere seitliche Bereich 5b in dieser beispielhaften Ausführungsform eine Ausdehnung, die einer Breite des Fahrzeuges 1 entspricht. Der linke seitliche Bereich 5c liegt neben einer linken Seite des Fahrzeuges 1, wobei dabei lediglich ein Bereich auf Höhe des Fahrzeuges 1 bezeichnet ist. Somit hat der linke seitliche Bereich 5c in dieser beispielhaften Ausführungsform eine Ausdehnung, die der Länge des Fahrzeuges 1 entspricht. Der hintere seitliche Bereich 5d liegt hinter einer Rückseite des Fahrzeuges 1, wobei dabei lediglich ein Bereich auf Höhe des Fahrzeuges 1 bezeichnet ist. Somit hat der hintere seitliche Bereich 5d in dieser beispielhaften Ausführungsform eine Ausdehnung, die der Breite des Fahrzeuges 1 entspricht.

In dem in Figur 2 gezeigten Szenario liegt in dem rechten seitlichen Bereich 5a ein erstes Objekt 3. Alle Objekte, die sich in der Fahrzeugumgebung 1 des Fahrzeuges 1 befinden, also auch das erste Objekt 3, wird mittels einer durch eine Abstandssensorik des Fahrzeuges 1 durchgeführten Umfelderfassung in Form von Messpunkten erfasst und der erfindungsgemäßen Vorrichtung bereitgestellt. Eine Abstandssensorik könnte dabei beispielsweise aus mehreren Ultraschallsensoren, einem LIDAR-System oder einer optischen Sensorik gebildet sein.

In dem ersten Schritt S1 wird für jeden der seitlichen Bereiche 5a, 5b, 5c, 5d ein erster signifikanter Punkt 2a, 2b, 2c ermittelt. Der erste signifikante Punkt 2a, 2b, 2c ist dabei ein dem Fahrzeug nächstgelegener Punkt eines oder mehrere Objekte in dem jeweiligen seitlichen Bereich 5a, 5b, 5c, 5d, wobei der nächstgelegene Punkt in dieser Ausführungsform durch einen Messpunkt beschrieben wird. So weist das erste Objekt 3 eine Ecke auf, die dem Fahrzeug 1 am nächsten liegt und somit einen den minimalen Abstand 4 zu dem Fahrzeug 1 aufweist. Somit wird diese Ecke des ersten Objekts 3 als erster signifikanter Punkt 2a für den rechten seitlichen Bereich 5a ermittelt. Wird in einem der seitlichen Bereich kein Objekt von der Abstandssensorik erfasst, so kann für diesen seitlichen Bereich 5a, 5b, 5c, 5d ein virtuelles Objekt angenommen werden und somit ein hilfsweiser signifikanter Punkt 2a, 2b, 2c mit einem vordefinierten minimalen Abstand angenommen werden.

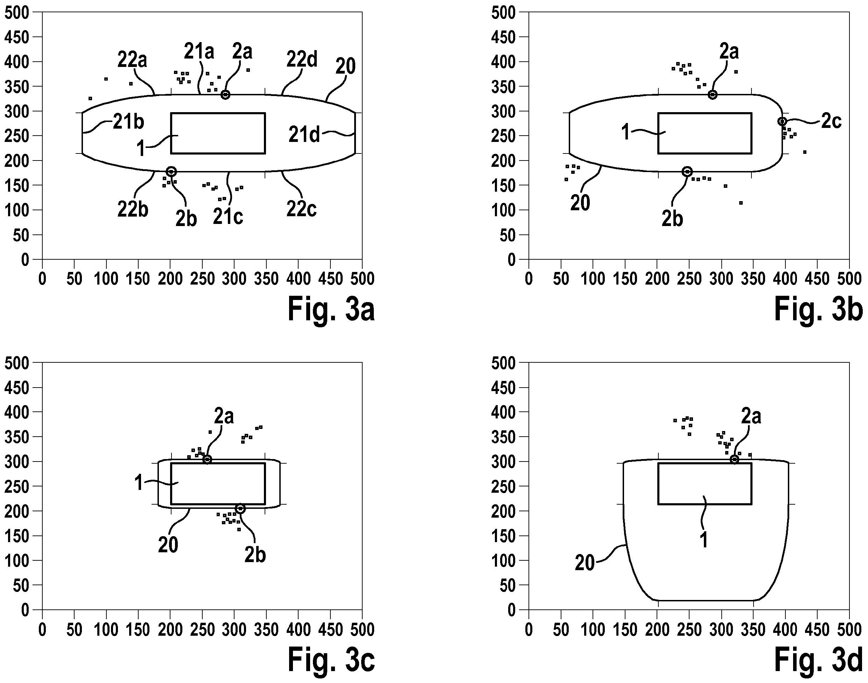

Die Figuren 3a bis 3d zeigen weitere beispielhafte Szenarien, in denen sich Objekte in einer Fahrzeugumgebung des Fahrzeuges 1 befinden. Dabei sind jedoch nicht die Objekte selbst, sondern die erfassten Objekte in der Form von Messpunkten dargestellt, die von der Abstandssensorik bereitgestellt werden. Der erste signifikante Punkt ist dabei also ein Messpunkt, der in einem seitlichen Bereich 5a, 5b, 5c, 5d dem Fahrzeug am nächsten gelegen ist. Um zu Vermeiden, dass ein fehlerhaft erfasster Messpunkt zu einer ungünstigen Hüllkurve 20 führt, erfolgt eine Filterung bezüglich fehlerhaft erfasster Messpunkte. Dazu wird die Fahrzeugumgebung mit einer Maske überlagert, welche die Fahrzeugumgebung in ein Raster mit Rasterzellen unterteilt. Für jede Rasterzelle wird eine Anzahl benachbarter, mit Messpunkten belegter Rasterzellen ermittelt. Basierend auf der ermittelten Anzahl kann die Relevanz einer Rasterzelle bewertet werden. Die Messwerte einer als nicht relevant bewerteten Rasterzelle werden bei dem Ermitteln erster signifikanter Punkte 2a, 2b, 2c nicht berücksichtigt und somit gefiltert.

Nach dem ersten Schritt S1 wird ein zweiter Schritt S2 ausgeführt.

In dem zweiten Schritt S2 erfolgt ein Ermitteln jeweils eines zweiten signifikanten Punktes 7a für vier Eckbereiche 8a, 8b, 8c, 8d des Fahrzeuges 1, welche jeweils die Lage eines zu der jeweiligen Ecke des Fahrzeuges 1 nächstgelegen Objektes 3 mit einem minimalen Abstand 9 zu der zugehörigen Ecke des Fahrzeuges 1 beschreibt.

Die vier Eckbereiche 8a, 8b, 8c, 8d sind ein vorderer rechter Eckbereich 8a, ein vorderer linker Eckbereich 8b, ein hinterer linker Eckbereich 8c und ein hinterer rechter Eckbereich 8d. Die vier Eckbereiche 8a, 8b, 8c, 8d sind in Figur 2 gezeigt. Der vordere rechte Eckbereich 8a liegt bezüglich des Fahrzeuges 1 vor dem rechten seitlichen Bereich 5a und rechts neben dem vorderen seitlichen Bereich 5b. Der vordere rechte Eckbereich 8a ist der vorderen rechten Ecke des Fahrzeuges 1 zugehörig, die hier ein Übergang zwischen der Fahrzeugfront und der rechten Seite des Fahrzeuges 1 ist. Der vordere linke Eckbereich 8b liegt bezüglich des Fahrzeuges 1 vor dem linken seitlichen Bereich 5c und links neben dem vorderen seitlichen Bereich 5b. Der vordere linke Eckbereich 8b ist der vorderen linken Ecke des Fahrzeuges 1 zugehörig, die hier ein Übergang zwischen der Fahrzeugfront und der linken Seite des Fahrzeuges 1 ist. Der hintere linke Eckbereich 8c liegt bezüglich des Fahrzeuges 1 hinter dem linken seitlichen Bereich 5c und links neben dem hinteren seitlichen Bereich 5c. Der hintere linke Eckbereich 8c ist der hinteren linken Ecke des Fahrzeuges 1 zugehörig, die hier ein Übergang zwischen der Rückseite des Fahrzeuges 1 und der linken Seite des Fahrzeuges 1 ist. Der hintere linke Eckbereich 8c liegt bezüglich des Fahrzeuges 1 hinter dem linken seitlichen Bereich 5c und links neben dem hinteren seitlichen Bereich 5c. Der hintere rechte Eckbereich 8d ist der hinteren rechten Ecke des Fahrzeuges 1 zugehörig, die hier ein Übergang zwischen der Rückseite des Fahrzeuges 1 und der rechten Seite des Fahrzeuges 1 ist.

In dem in Figur 2 gezeigten Szenario liegt in dem vorderen rechten Eckbereich 8a ein zweites Objekt 6. Wie auch das erste Objekt 3, wird auch das zweite Objekt 6 durch die Abstandssensorik des Fahrzeuges 1 erfasst.

In dem zweiten Schritt S2 wird für jeden der Eckbereiche 8a, 8b, 8c, 8d ein zweiter signifikanter Punkt 7a ermittelt. Der zweite signifikante Punkt ist dabei ein dem Fahrzeug nächstgelegener Punkt eines oder mehrere Objekte in dem jeweiligen Eckbereich 8a, 8b, 8c, 8d, wobei der nächstgelegene Punkt in dieser Ausführungsform durch einen Messpunkt beschrieben wird. So weist das zweite Objekt 6 eine Ecke auf, die dem Fahrzeug 1 am nächsten liegt und somit einen minimalen Abstand 9 zu dem Fahrzeug 1 aufweist. Somit wird diese Ecke als zweiter signifikanter Punkt 7a für den vorderen rechten Eckbereich 8a ermittelt. Wird in einem der Eckbereiche 8a, 8b, 8c, 8d kein Objekt von der Abstandssensorik erfasst, so kann für diesen Eckbereiche 8a, 8b, 8c, 8d ein virtuelles Objekt angenommen werden und somit ein hilfsweiser zweiter signifikanter Punkt mit einem vordefinierten minimalen Abstand angenommen werden.

Wie bereits zuvor beschrieben zeigen die Figuren 3a bis 3d weitere beispielhafte Szenarien, in denen sich Objekte in einer Fahrzeugumgebung des Fahrzeuges 1 befinden. Der zweite signifikante Punkt ist dabei ein Messpunkt, der in einem der Eckbereiche 8a, 8b, 8c, 8d dem Fahrzeug 1 am nächsten gelegen ist. Um zu Vermeiden, dass ein fehlerhaft erfasster Messpunkt zu einer ungünstigen Hüllkurve 20 führt, erfolgt eine Filterung bezüglich fehlerhaft erfasster Messpunkte. Dazu wird die Fahrzeugumgebung mit der Maske überlagert, welche die Fahrzeugumgebung in ein Raster mit Rasterzellen unterteilt. Für jede Rasterzelle wird eine Anzahl benachbarter, mit Messpunkten belegter Rasterzellen ermittelt. Basierend auf der ermittelten Anzahl kann die Relevanz einer Rasterzelle bewertet werden. Die Messwerte einer als nicht relevant bewerteten Rasterzelle werden bei dem Ermitteln zweiter signifikanter Punkte 7a nicht berücksichtigt und somit gefiltert.

Nach dem zweiten Schritt S2 wird ein dritter Schritt S3 ausgeführt.

In dem dritten Schritt S3 erfolgt ein Errechnen einer das Fahrzeug 1 umgebenden Hüllkurve 20. Die Hüllkurve 20 setzt sich dabei aus vier geradlinigen Elementen 21a, 21b, 21c, 21d und vier Kurvenelementen 22a, 22b, 22c, 22d zusammen. Die Hüllkurve 20 umläuft das Fahrzeug 1 oder zumindest ein das Fahrzeug 1 repräsentierendes geometrisches Konstrukt.

Jedes der geradlinigen Elemente 21a, 21b, 21c, 21d liegt in jeweils einem der vier seitlichen Bereiche 5a, 5b, 5c, 5d des Fahrzeuges 1. Es liegt somit auf jeder Seite des Fahrzeuges 1 genau eines der geradlinigen Elemente 21a, 21b, 21c, 21d. In dem rechten seitlichen Bereich 5a liegt ein rechtes geradliniges Element 21a. In dem vorderen seitlichen Bereich 5b liegt ein vorderes geradliniges Element 21b. In dem linken seitlichen Bereich 5c liegt ein linkes geradliniges Element 21c. In dem hinteren seitlichen Bereich 5d liegt ein hinteres geradliniges Element 21d. Dabei sind das rechte geradlinige Element 21a und das linke geradlinige Element 21c parallel zu einer Längsachse des Fahrzeuges 1 gelegen. Das vordere geradlinige Element 21b und das hintere geradlinige Element 21d sind parallel zu einer Querachse des Fahrzeuges 1 gelegen. Jedes der Kurvenelemente 22a, 22b, 22c, 22d liegt in jeweils einem der vier Eckbereiche 8a, 8b, 8c, 8d des Fahrzeuges 1. Es liegt somit an jeder Ecke des Fahrzeuges 1 genau eines der Kurvenelemente 22a, 22b, 22c, 22d. In dem vorderen rechten Eckbereich 8a liegt ein vorderes rechtes Kurvenelement 22a. In dem vorderen linken Eckbereich 8b liegt ein vorderes linkes Kurvenelement 22a. In dem hinteren linken Eckbereich 8c liegt ein hinteres linkes Kurvenelement 22c. In dem hinteren rechten Eckbereich 8d liegt ein hinteres rechtes Kurvenelement 22d. Jedes der Kurvenelemente 22a, 22b, 22c, 22d beschreibt einen Abschnitt jeweils einer Ellipse.

Gemäß der Erfindung ist jedes der Kurvenelemente 22a, 22b, 22c, 22d ein Viertel jeweils einer Ellipse, wobei dieses Viertel der jeweiligen Ellipse ein Abschnitt zwischen einer Hauptachse und einer Nebenachse der jeweiligen Ellipse ist. Es wird somit von jedem der Kurvenelemente 22a, 22b, 22c, 22d ein 90Grad-Bogen beschrieben. Dabei liegt das Zentrum der Ellipse, auf welcher das jeweilige der Kurvenelemente 22a, 22b, 22c, 22d liegt, in einem Kontaktpunkt der benachbarten zweier seitlichen Bereiche 5a, 5b, 5c, 5d. In diesem Falle entsprechen diese Kontaktpunkte den zugehörigen Ecken des Fahrzeuges 1. Somit wird gewährleistet, dass an den Stellen, an denen die Kurvenelemente 22a, 22b, 22c, 22d mit den geradlinigen Elementen 21a, 21b, 21c, 21d in Kontakt treten, kein Knick in der Hüllkurve 20 auftritt. Diese Übergangsbereiche zwischen den geradlinigen Elementen 21a, 21b, 21c, 21d und dem jeweils benachbarten Kurvenelementen 22a, 22b, 22c, 22d sind somit stetig differenzierbar.

Die Hüllkurve 20 wird unter Berücksichtigung der zuvor beschriebenen Eigenschaften der Hüllkurve 20, die sich aus den Eigenschaften der Kurvenelemente 22a, 22b, 22c, 22d und der geradlinigen Elemente 21a, 21b, 21c, 21d ergibt, derart berechnet, dass diese einen maximalen Abstand zu dem Fahrzeug 1 hat und alle signifikanten Punkte 2a, 2b, 2c, 7a außerhalb oder auf der Hüllkurve 20 liegen. Es wird also der jeweilige minimale Abstand der ersten signifikanten Punkte 2a, 2b, 2c und der jeweilige minimale Abstand der zweiten signifikanten Punkte 7a berücksichtigt und nach einer globalen Lösung für eine Hüllkurve 20 gesucht. Dazu können die vier geradlinigen Elemente 21a, 21b, 21c, 21d zwischen dem Fahrzeug 1 und dem zugehörigen signifikanten ersten Punkt 2a, 2b, 2c verschoben werden und ein Haupt- und Nebenradius der die vier Kurvenelemente 22a, 22b, 22c, 22d beschreibenden Ellipsen verändert werden, bis eine globale Lösung für die Hüllkurve 20 gefunden ist, welche die zuvor beschriebenen Anforderungen erfüllt.

In den Figuren 3a bis 3d sind Beispiele für Hüllkurven 20 gezeigt. Es ist ersichtlich, dass jede der in den Figuren 3a bis 3d gezeigten Hüllkurven 20 zwischen den relevanten Messpunkten und dem Fahrzeug 1 liegt. Liegt auf einer Seite des Fahrzeuges 1 kein relevanter Messpunkt und somit kein signifikanter Punkt vor, so liegt der Abstand der Hüllkurve 20 zu dem Fahrzeug in einem vordefinierten Bereich.

Nach dem dritten Schritt S3 wird ein vierter Schritt S4 ausgeführt.

In dem vierten Schritt S4 erfolgt ein Erfassen der Fahrzeugumgebung in Kamerabildern und Projizieren der Kamerabilder auf eine geometrische Projektionsfläche, welche Wandbereiche aufweist, die einen der Hüllkurve 20 entsprechenden Verlauf aufweisen. Das Erfassen der Fahrzeugumgebung in Kamerabildern erfolgt in dieser Ausführungsform durch mehrere an dem Fahrzeug 1 angeordneten Kameras, welche jeweils mit einer Weitwinkellinse ausgestattet sind.

Basierend auf der errechneten Hüllkurve 20 wird die geometrische Projektionsfläche errechnet. Dabei wird die Hüllkurve 20 in einem virtuellen geometrischen Raum, der die Fahrzeugumgebung des Fahrzeuges 1 repräsentiert, übertragen. Entlang der Hüllkurve wird in dem virtuellen geometrischen Raum eine Fläche erzeugt, die in ihrem Verlauf entlang einer Hochachse des Fahrzeuges 1 geradlinig ist.

Die Kamerabilder werden auf die so erzeugte geometrische Projektionsfläche projiziert und als Textur der geometrischen Projektionsfläche gespeichert. Eine virtuelle Kamera in dem virtuellen geometrischen Raum kann ein Abbild der texturierten geometrischen Projektionsfläche aus einer beliebigen Position in dem geometrischen Raum erfassen. Ein solches Bild der virtuellen Kamera wird dem Fahrer des Fahrzeuges angezeigt.

Zusammenfassend hat die geometrische Projektionsfläche somit vier ebene Wandflächen an den vier Seiten des Fahrzeuges 1. Die Länge dieser Wandflächen entspricht in etwa der Länge der zugehörigen Seite des Fahrzeuges 1, wobei dabei insbesondere die Länge der Seiten des Fahrzeuges 1 in dem virtuellen Raum betrachtet wird. Dabei wurde der Abstand dieser Wandflächen gegenüber dem Fahrzeug 1 aus den Belegungsinformationen, in dieser Ausführungsform den Messpunkten der Abstandssensorik, errechnet. Die Wandbereiche sind über elliptisch gebogene Kurvenwände verbunden.

Nach dem vierten Schritt S4 verzweigt das Verfahren zurück auf den ersten Schritt S1, wodurch das erfindungsgemäße Verfahren in einer Schleife ausgeführt wird und eine jederzeit zeitlich aktuelle Darstellung der Fahrzeugumgebung ermöglicht wird.

Neben der obigen schriftlichen Offenbarung wird explizit auf die Offenbarung der Figuren 1 bis 3d verwiesen.

## Patentansprüche

1. Verfahren für eine Recheneinheit (30) zum Erstellen einer Darstellung einer Fahrzeugumgebung eines Fahrzeuges (1), umfassend:
- Ermitteln jeweils eines ersten signifikanten Punktes (2a, 2b, 2c) für vier seitliche Bereiche (5a, 5b, 5c, 5d) des Fahrzeuges (1), welcher die Lage eines auf dieser Seite des Fahrzeuges (1) nächstgelegen Objektes (3) mit einem minimalen Abstand (4) zu der zugehörigen Seite des Fahrzeuges (1) beschreibt,
- Ermitteln jeweils eines zweiten signifikanten Punktes (7a) für vier Eckbereiche (8a, 8b, 8c, 8d) des Fahrzeuges (1), welche jeweils die Lage eines zu der jeweiligen Ecke des Fahrzeuges (1) nächstgelegen Objektes (3) mit einem minimalen Abstand (9) zu der zugehörigen Ecke des Fahrzeuges (1) beschreibt, wobei
- das Ermitteln der signifikanten Punkte (2a, 2b, 2c, 7a) basierend auf einer durch eine Abstandssensorik durchgeführten Umfelderfassung des Fahrzeuges (1) erfolgt,
- Errechnen einer das Fahrzeug (1) umgebenden Hüllkurve (20), welche sich aus vier geradlinige Elementen (21a, 21b, 21c, 21d) und aus vier Kurvenelementen (22a, 22b, 22c, 22d) zusammensetzt, wobei
• jedes der geradlinigen Elemente (21a, 21b, 21c, 21d) in jeweils einem der vier seitlichen Bereiche (5a, 5b, 5c, 5d) des Fahrzeuges (1) liegt, und
• jedes der Kurvenelemente (22a, 22b, 22c, 22d) in jeweils einem der vier Eckbereiche (8a, 8b, 8c, 8d) des Fahrzeuges (1) liegt, wobei jedes der Kurvenelemente (22a, 22b, 22c, 22d) einen Abschnitt jeweils einer Ellipse beschreibt, wobei das Zentrum der Ellipse, auf welcher eines der Kurvenelemente (22a, 22b, 22c, 22d) liegt, in einem Kontaktpunkt zweier benachbarter seitlicher Bereiche (5a, 5b, 5c, 5d) liegt, wobei die Hüllkurve (20) derart berechnet wird, dass diese einen maximalen Abstand zu dem Fahrzeug (1) hat und alle signifikanten Punkte (2a, 2b, 2c, 7a) außerhalb oder auf der Hüllkurve (20) liegen, und
- Erfassen der Fahrzeugumgebung in Kamerabildern und Projizieren der Kamerabilder auf eine geometrische Projektionsfläche in einem virtuellen geometrischen Raum, welche Wandbereiche aufweist, die einem der Hüllkurve (20) entsprechenden Verlauf aufweisen.

2. Verfahren gemäß Anspruch 1, **dadurch gekennzeichnet, dass** die Hüllkurve (20) in einem Übergangsbereich zwischen einem der geradlinigen Elemente (21a, 21b, 21c, 21d) und einem benachbarten Kurvenelement (22a, 22b, 22c, 22d) stetig differenzierbar ist.

3. Verfahren gemäß einem der vorhergehenden Ansprüche, **dadurch gekennzeichnet, dass** zwei der geradlinigen Elemente (21a, 21b, 21c, 21d) parallel zu einer Längsachse des Fahrzeuges (1) liegen und/oder zwei der geradlinigen Elemente (21a, 21b, 21c, 21d) parallel zu einer Querachse des Fahrzeuges (1) liegen.

4. Verfahren gemäß einem der vorhergehenden Ansprüche, **dadurch gekennzeichnet, dass** bei dem Ermitteln der signifikanten Punkte (2a, 2b, 2c, 7a) eine Filterung bezüglich fehlerhaft erfasster Messpunkte erfolgt.

5. Verfahren gemäß einem der vorhergehenden Ansprüche, **dadurch gekennzeichnet, dass** die Wandbereiche in einem Verlauf entlang einer Hochachse des Fahrzeuges (1) geradlinig sind.

6. Recheneinheit (30) zum Erstellen einer Darstellung einer Fahrzeugumgebung eines Fahrzeuges (1), die Mittel zur Ausführung des Verfahrens nach Anspruch 1 umfasst.

## Claims

1. Method for a computation unit (30) for creating a presentation of a vehicle surroundings of a vehicle (1), comprising:
- ascertaining in each case a first significant point (2a, 2b, 2c) for four lateral regions (5a, 5b, 5c, 5d) of the vehicle (1), which point describes the position of an object (3) that is closest to this side of the vehicle (1) and has a minimum distance (4) from the associated side of the vehicle (1),
- ascertaining in each case a second significant point (7a) for four corner regions (8a, 8b, 8c, 8d) of the vehicle (1), which point describes in each case the position of an object (3) that is closest to the respective corner of the vehicle (1) and has a minimum distance (9) from the associated corner of the vehicle (1), wherein
- the significant points (2a, 2b, 2c, 7a) are ascertained on the basis of a capturing operation of the surroundings of the vehicle (1) carried out by a distance sensor system,
- computing an envelope (20) surrounding the vehicle (1), which is composed of four straight-line elements (21a, 21b, 21c, 21d) and of four curve elements (22a, 22b, 22c, 22d), wherein
• each of the straight-line elements (21a, 21b, 21c, 21d) lies in each case in one of the four lateral regions (5a, 5b, 5c, 5d) of the vehicle (1), and
• each of the curve elements (22a, 22b, 22c, 22d) lies in each case in one of the four corner regions (8a, 8b, 8c, 8d) of the vehicle (1), wherein each of the curve elements (22a, 22b, 22c, 22d) describes a section of in each case one ellipse, wherein the centre of the ellipse, on which one of the curve elements (22a, 22b, 22c, 22d) lies, lies at a contact point of two adjacent lateral regions (5a, 5b, 5c, 5d),
wherein the envelope (20) is computed such that it has a maximum distance from the vehicle (1) and all significant points (2a, 2b, 2c, 7a) lie outside or on the envelope (20), and
- capturing the vehicle surroundings in camera images and projecting the camera images onto a geometric projection surface in a virtual geometric space, which has wall regions that have a profile corresponding to the envelope (20).

2. Method according to Claim 1, **characterized in that** the envelope (20) is continuously differentiable in a transition region between one of the straight-line elements (21a, 21b, 21c, 21d) and an adjacent curve element (22a, 22b, 22c, 22d).

3. Method according to either of the preceding claims, **characterized in that** two of the straight-line elements (21a, 21b, 21c, 21d) lie parallel to a longitudinal axis of the vehicle (1) and/or two of the straight-line elements (21a, 21b, 21c, 21d) lie parallel to a transverse axis of the vehicle (1).

4. Method according to one of the preceding claims, **characterized in that**, during the ascertainment of the significant points (2a, 2b, 2c, 7a), a filtering with respect to incorrectly captured measurement points takes place.

5. Method according to one of the preceding claims, **characterized in that** the wall regions are straight in a profile along a vertical axis of the vehicle (1).

6. Computation unit (30) for creating a presentation of a vehicle surroundings of a vehicle (1), which comprises means for carrying out the method according to Claim 1.

## Revendications

1. Procédé destiné à une unité de calcul (30) permettant de créer une représentation d'un environnement d'un véhicule (1), comprenant les étapes consistant à :
- déterminer respectivement un premier point significatif (2a, 2b, 2c) pour quatre zones latérales (5a, 5b, 5c, 5d) du véhicule (1) qui décrit la position d'un objet (3) le plus proche sur ce côté du véhicule (1) avec une distance minimale (4) par rapport au côté associé du véhicule (1),
- déterminer un deuxième point significatif (7a) pour quatre zones de coin (8a, 8b, 8c, 8d) du véhicule (1) qui décrit respectivement la position d'un objet (3) le plus proche du coin respectif du véhicule (1) avec une distance minimale (9) par rapport au coin associé du véhicule (1), dans lequel
- la détermination des points significatifs (2a, 2b, 2c, 7a) est effectuée sur la base d'une détection d'environnement du véhicule (1), exécutée par un système de capteurs de distance,
- calculer une enveloppante (20) entourant le véhicule (1) et qui est composée de quatre éléments rectilignes (21a, 21b, 21c, 21d) et de quatre éléments courbes (22a, 22b, 22c, 22d), dans lequel
• chacun des éléments rectilignes (21a, 21b, 21c, 21d) se trouve dans respectivement l'une des quatre zones latérales (5a, 5b, 5c, 5d) du véhicule (1), et
• chacun des éléments courbes (22a, 22b, 22c, 22d) se trouve respectivement dans l'une des quatre zones de coin (8a, 8b, 8c, 8d) du véhicule (1), chacun des éléments courbes (22a, 22b, 22c, 22d) décrivant respectivement une partie d'une ellipse, le centre de l'ellipse où se trouve l'un des éléments courbes (22a, 22b, 22c, 22d) se trouvant en un point de contact de deux zones latérales (5a, 5b, 5c, 5d) voisines,
l'enveloppante (20) étant calculée de telle sorte qu'elle présente une distance maximale par rapport au véhicule (1) et que tous les points significatifs (2a, 2b, 2c, 7a) se trouvent à l'extérieur de l'enveloppante (20) ou sur celle-ci, et
- détecter l'environnement de véhicule sur des images de caméra, et projeter les images de caméra sur une surface de projection géométrique dans un espace géométrique virtuel qui présente des zones de paroi qui présentent un contour correspondant à l'enveloppante (20) .

2. Procédé selon la revendication 1, **caractérisé en ce que** l'enveloppante (20) est différenciable en continu dans une zone de transition entre l'un des éléments rectilignes (21a, 21b, 21c, 21d) et un élément courbe (22a, 22b, 22c, 22d) voisin.

3. Procédé selon l'une quelconque des revendications précédentes, **caractérisé en ce que** deux des éléments rectilignes (21a, 21b, 21c, 21d) se trouvent en parallèle à un axe longitudinal du véhicule (1) et/ou deux des éléments rectilignes (21a, 21b, 21c, 21d) se trouvent en parallèle à un axe transversal du véhicule (1).

4. Procédé selon l'une quelconque des revendications précédentes, **caractérisé en ce que** lors de la détermination des points significatifs (2a, 2b, 2c, 7a), un filtrage concernant des points de mesure détectés par erreur est effectué.

5. Procédé selon l'une quelconque des revendications précédentes, **caractérisé en ce que** les zones de paroi dans un contour le long d'un axe normal du véhicule (1) sont rectilignes.

6. Unité de calcul (30) permettant de créer une représentation d'un environnement d'un véhicule (1) et comprenant des moyens pour exécuter le procédé selon la revendication 1.
